# EUROPÄISCHE PATENTSCHRIFT

(11) **EP 0 895 495 B1**
(45) Veröffentlichungstag und Bekanntmachung des Hinweises auf die Patenterteilung: **11.10.2000**
(21) Anmeldenummer: 97921781.7
(22) Anmeldetag: 25.04.1997
(51) Int. Cl.: B60K 17/12, B60K 25/00, E01H 4/02

(54) **KETTENGETRIEBENES PISTENPFLEGEFAHRZEUG**
ROAD MAINTENANCE TRACKLAYING VEHICLE
VEHICULE SUR CHENILLES POUR L'ENTRETIEN DE PISTES

(30) Priorität: 26.04.1996 DE 29607651 U
(43) Veröffentlichungstag der Anmeldung: 10.02.1999
(73) Patentinhaber: Kässbohrer Geländefahrzeug AG, 89250 Senden (DE)
(72) Erfinder: KANZLER, Helmut, D-89269 Vöhringen (DE); KUHN, Michael, D-89171 Illerkirchberg (DE)
(74) Vertreter: Wilhelm & Dauster Patentanwälte European Patent Attorneys
(86) Internationale Anmeldenummer: EP9702151
(87) Internationale Veröffentlichungsnummer: WO9740996

(56) Entgegenhaltungen:
- EP-A- 0 089 460
- WO-A-92/08278
- WO-A-94/09548
- DE-A- 2 244 385
- US-A- 1 863 504
- US-A- 4 113 045

## Beschreibung

Die Erfindung betrifft ein kettengetriebenes Pistenpflegefahrzeug mit den Merkmalen des Oberbegriffs des Patentanspruchs 1.

Ein solches Fahrzeug ist aus der WO94/09548 bekannt. Bei dem vorbekannten Fahrzeug wird von einem Verbrennungsmotor über einen Generator ein Elektromotor für ein Antriebsrad einer Kette angetrieben. Im Schiebebetrieb kann der Elektromotor als Stromerzeuger für Nebenantriebe des Fahrzeugs geschaltet werden. Solche Nebenantriebe sind für am Pistenpflegefahrzeug anbringbare Zusatzgeräte, wie zum Beispiel Schneefräse, Frontfrässchleuder oder dergleichen und/oder für Fahrzeugkomponenten, wie beispielsweise eine Kippvorrichtung für Plattform und Fahrerhaus oder zur Kettenspannung vorgesehen.

Nachteilig bei dem vorbekannten Pistenpflegefahrzeug ist, daß beispielsweise Elektromotore für eine Fräswelle direkt von einer Leistungssteuereinheit gesteuert werden, ohne daß etwas über eine Abhängigkeit dieser Steuerung von der Fahrzeuggeschwindigkeit oder dergleichen ausgesagt ist.

Der Erfindung liegt daher die Aufgabe zugrunde, ein Pistenpflegefahrzeug der eingangs genannten Art dahingehend zu verbessern, daß unabhängig von der Fahrzeuggeschwindigkeit oder einer Bergauf- oder Bergabfahrt des Fahrzeugs eine gleichmäßige und gleichmäßig gute Pistenpflege gewährleistet ist.

Diese Aufgabe wird bei einem Pistenpflegefahrzeug mit den Merkmalen des Oberbegriffs des Anspruchs 1 dadurch gelöst, daß der elektrische Antrieb für die Fräswelle mit dem Elektromotor für das Turrasrad synchronisiert ist. Auf diese Weise können Fräswellendrehzahl und Fahrgeschwindigkeit aufeinander abgestimmt werden und es ergibt sich eine definierte Anzahl von Zahneingriffen der Fräswelle je Wegstrecke.

Weiterhin ergibt sich generell, daß im Vergleich zu aus der Praxis bekannten hydrostatischen Antrieben eine gleich gute Zuverlässigkeit und Robustheit gegenüber Umwelteinflüssen und Überbelastung gegeben ist. Der Elektromotor ermöglicht eine präzise Steuerung der Kraftübertragung. Durch das elektrische Antriebssystem wird aufgrund dessen höheren Wirkungsgrades eine gleich oder gar höhere Zugkraft am Turrasrad und vergleichbare oder bessere Fahrleistungen als bei einem hydrostatischen Antrieb erreicht.

Da alle Hydraulik-Komponenten eines hydrostatischen Antriebs im Antriebsstrang weggefallen sind, ergibt sich eine spürbare Gewichtsreduzierung für das Pistenpflegefahrzeug und es entfallen alle Schwierigkeiten, die sich möglicherweise bei der Abdichtung und der Hydraulikmediumversorgung eines hydrostatischen Antriebs ergeben könnten.

Generator und Elektromotor und die entsprechenden Verbindungen zwischen diesen und zum Verbrennungsmotor sind einfach und ohne größere Veränderungen am Hauptrahmen des Kettenfahrzeugs installierbar. Außerdem ist ein Elektromotor in seiner Leistung exakt steuerbar und kann bei Talfahrt oder Schiebebetrieb als Bremse eingesetzt werden, wobei gleichzeitig eine Energierückspeisung durch die generatorische Wirkung des Elektromotors erfolgen kann.

Diese Energierückspeisung bewirkt zusätzlich zu dem guten Wirkungsgrad des Antriebssystems eine weitere Reduzierung des Energieverbrauchs, da die gewonnene Energie beispielsweise direkt zum Betrieb der Nebenantriebe für die Zusatzgeräte eingesetzt werden kann.

Die Nebenantriebe für die am Fahrzeug anbringbaren Zusatzgeräte und/oder für weitere Fahrzeugkomponenten können als elektrohydraulische oder elektrische Antriebe ausgebildet sein. Elektrische Antriebe können beispielsweise für rotatorische Bewegungen bevorzugt sein, wie für die Fräswelle der Schneefräse, für eine Frontfrässchleuder mit Schnecke und Schleuderrad, für einen Windenantrieb oder dergleichen. Elektrohydraulische Antriebe können für die Verstellmechanismen vorne und hinten am Pistenpflege fahrzeug, für eine Feststellbremse, für Kippvorrichtungen, für die Kettenspanneinrichtung oder dergleichen eingesetzt werden. Die Verstellmechanismen dienen beispielsweise zum Verstellen der entsprechenden Geräteträger an Front und Heck sowie zum Verstellen verschiedener Zusatzgeräte wie Frontfrässchleuder oder Räumschild. Eine Kippvorrichtung am Kettenfahrzeug dient zum Kippen des Fahrerhauses oder zum Verkippen einer Ladeplattform des Pistenpflegefahrzeugs.

Um beispielsweise jedes Turrasrad für sich exakt steuern zu können und dadurch beispielsweise das Kettenfahrzeug durch unterschiedliche Umdrehungsgeschwindigkeiten der Turrasräder zu lenken, erweist es sich als vorteilhaft, wenn jedes Turrasrad mit einem separaten Elektromotor verbunden ist.

Zur entsprechenden Bewegungsverbindung von Elektromotor und Turrasrad können zwischen diesen in an sich bekannter Weise ein Planetengetriebe und bei Einsatz nur eines Elektromotors für beide Turrasräder ein Lenkgetriebe angeordnet sein.

Bei Verwendung von einem Elektromotor für jedes Turrasrad ist eine Kopplung der Elektromotore untereinander durchführbar, wenn einer der Elektromotore ausfällt. Auf diese Weise kann das Kettenfahrzeug auch mit nur einem Elektromotor weiterbewegt werden.

Bei Verwendung nur eines Elektromotors, und eines Lenkgetriebes können diese beispielsweise zentral am Kettenfahrzeug angeordnet sein, während Planetengetriebe und Turrasrad je eine Einheit bilden und räumlich einer jeden Kette zugeordnet sind. Ebenso können die Planetengetriebe für die beiden Turrasräder einer jeden Kette und das Lenkgetriebe eine Einheit bilden, welche beispielsweise zentral am Fahrzeug angeordnet und über eine eigene mechanische Kopplung mit den Turrasrädern verbunden ist.

Statt der elektrohydraulischen Antriebe für die entsprechenden Linearbewegungen und Kleinverbraucher können auch entsprechende elektrische Antriebe verwendet werden.

Bei Einsatz von elektrohydraulischen Antrieben ist es aus Gründen des Umweltschutzes von Vorteil, wenn das entsprechende Hydraulikmedium für den Antrieb ein Medium auf Wasserbasis ist.

Um bei Talfahrt oder Schiebebetrieb des Kettenfahrzeuges die rückgewonnene und nicht direkt benötigte Energie zu speichern, kann das Kettenfahrzeug in einer weiteren Variante mit einem vom Generator oder generatorisch arbeitendem Elektromotor speisbaren Energiepuffer als Zusatzgerät ausgebildet sein. Ein solcher Energiepuffer kann eine übliche Batterie, ein Schwungradspeicher oder dergleichen sein.

Um den Fahrzeugantrieb mit Verbrennungsmotor, Generator und Elektromotor sowie die Erzeugung und Verteilung von Energie zu steuern, weist das Kettenfahrzeug eine Leistungselektronik zumindest zur Steuerung von Fahrmotoren und/oder den Nebenantrieben auf. Durch die Leistungselektronik können beispielsweise Drehzahl, Frequenz und Stromstärke der Elektrofahrmotoren, des Fräsantriebs, der Antriebe einer Elektrowinde oder einer Elektrofrontfrässchleuder und dergleichen gesteuert werden. Weiterhin kann die Fahrzeugsteuerung im Zusammenspiel mit der Leistungselektronik die Energieerzeugung von Verbrennungsmotor/Generator und von Elektromotoren bzw. den Energieverbrauch durch die Elektromotore steuern. Dabei steuert die Elektronik weiterhin das Umschalten des Elektromotors zum Stromerzeuger und damit zum Energielieferanten bei Talfahrt oder im Schiebebetrieb steuern.

Um den Verbrennungsmotor verbrauchsoptimiert und mit verringerter Schadstoffemission einzusetzen, ist es weiterhin von Vorteil, wenn der Verbrennungsmotor eine elektronische Motorregelung aufweist. Die elektronische Motorregelung kann mit der Antriebssteuerung bzw. der Leistungselektronik kommunizieren und von dieser zur Steuerung der Motordrehzahl in Abhängigkeit vom aktuellen Energiebedarf angesteuert werden.

Sind zumindest die elektrohydraulischen Antriebe dezentral angeordnet und umfassen einen Elektromotor, eine Pumpe, einen Steuerblock und einen Hydraulikmediumtank, können die entsprechenden Hydraulikleitungen relativ kurz sein und die Versorgung dieser dezentral angeordneten elektrohydraulischen Antriebe erfolgt über elektrische Leitungen. Dadurch können diese elektrohydraulischen Antriebe als kompakte Einheiten in der Nähe des eigentlichen Verbrauchers angeordnet werden. Als entsprechende Pumpe für das Hydraulikmedium kann beispielsweise eine Zahnradpumpe verwendet werden.

In diesem Zusammenhang ist weiterhin beachtlich, daß ein solcher elektrohydraulischer Antrieb beispielsweise mehrere Verbraucher versorgen kann, wie beispielsweise Fahrerhauskippung und Kettenspannung oder ähnliches.

Um eine gute Zugänglichkeit zur Leistungselektronik und kürzestmögliche Verbindungen zu allen Verbrauchern zu ermöglichen, ist die Leistungselektronik zur Energieverteilung an alle Verbraucher und zur Energierückspeisung zentral im Kettenfahrzeug angeordnet.

Sind alle Komponenten des Kettenfahrzeuges, insbesondere der Elektronik und auch des Antriebsstrangs, modulartig aufgebaut, können die entsprechenden Module in allen Baureihen des Kettenfahrzeuges eingesetzt oder ergänzt werden. Dabei verfügen die Module über entsprechende standardisierte Schnittstellen.

Zum zusätzlichen Bremsen des Kettenfahrzeuges bei Stillstand und zur Erhöhung der Sicherheit, kann das Kettenfahrzeug eine Feststellbremse, insbesondere als im Planetengetriebe integrierte Lamellenbremse, aufweisen.

Weist das Kettenfahrzeug einen Windenaufbau auf, wobei die Winde über einen elektrischen Antrieb verfügt, kann auch dieser zur Energierückspeisung bei Talfahrt ausgebildet sein. Die rückgewonnene Energie kann beispielsweise zum Antrieb der Fräswelle oder anderer Nebenantriebe eingesetzt werden.

Um das Kettenfahrzeug extern mit insbesondere elektrischer Energie zu versorgen, kann dieses eine Energieeinspeiseeinrichtung aufweisen. Vorzugsweise ist diese als Schleppkabel oder als mit Fahrdrähten bzw. Stromschienen koppelbares Kupplungssystem ausgebildet.

Auf diese Weise kann insbesondere in häufig befahrenen Passagen der Pisten emissionsfrei mit dem Kettenfahrzeug gefahren werden, während die Energieeinspeisung durch die Fahrdrähte oder Stromschienen erfolgt. Gleichzeitig können dabei die Energiepuffer des Fahrzeuges geladen werden.

Entsprechende Stromschienen können beispielsweise entlang von Lifttrassen bzw. am Pistenrand in ausreichend sicherer Höhe angebracht sein. Diese Stromschienen können gleichzeitig Träger für Flutlichtanlagen sein. Weiterhin kann das Kettenfahrzeug auch mit seiner Energieeinspeiseeinrichtung alternativ an Stromquellen angeschlossen werden, die an bestimmten Stellen beispielsweise entlang der Piste angeordnet sind.

In diesem Zusammenhang ist zu beachten, daß bei Kettenfahrzeugen die vorzugsweise im Bereich von Indoor-Skiing eingesetzt werden, die entsprechende Energieversorgung ausschließlich über die Energieeinspeiseeinrichtung erfolgen kann. In diesem Fall kann auf den Verbrennungsmotor mit entsprechendem Generator sowie auf die erforderlichen Nebenaggregate wie Motorkühlsystem, Starter, Lichtmaschine, Kraftstofftank, Starterbatterie usw. verzichtet werden. Dadurch ergibt sich bei rein elektrischem Betrieb des Kettenfahrzeuges eine weitere erhebliche Gewichtseinsparung.

Eine Ankopplung an die Fahrdrähte oder Stromschienen kann über einen Windenaufbau erfolgen, wobei die externe elektrische Energie über eine Leitung auf der Haspel zugeführt wird.

Um bei der Pistenpflege beispielsweise mehrere Kettenfahrzeug im Verbund einzusetzen und zu versorgen, kann ein solches mit externer elektrischen Energiezufuhr ausgestattetes Kettenfahrzeug einen Verbundanschluß zur energetischen Verbindung mit wenigstens einem weiteren Kettenfahrzeug aufweisen. Dadurch kann elektrische Energie zwischen den verbundenen Kettenfahrzeugen übertragen werden. Natürlich können auch mehrere Kettenfahrzeuge in dieser Art untereinander verbunden sein.

Bei dem neuartigen Antriebsstrang des Kettenfahrzeuges ergeben sich vielfache Möglichkeiten zur Heizung des Kettenfahrzeuges. Diese kann beispielsweise mit Abwärme der Motore (Diesel und/oder elektrisch) und/oder des Hydrauliksystems und/oder der Leistungselektronik versorgt werden. Weiterhin kann auch eine elektrische Heizung beispielsweise zusätzlich verwendet werden.

Zur vereinfachten Bedienung beziehungsweise Steuerung des Kettenfahrzeuges kann dieses einen Sollwertgeber zumindest für die gewünschte Fahrgeschwindigkeit aufweisen. Dieser kann als übliches Gaspedal ausgebildet sein. Durch die entsprechende Stellung des Sollwertgebers wird die Fahrgeschwindigkeit ausgewählt und die Elektromotoren-Drehzahl entsprechend eingeregelt.

Bei einem vorteilhaften Ausführungsbeispiel ist die Leistungselektronik beziehungsweise die Fahrzeugsteuerung mit dem Sollwertgeber verbunden und weist eine Auswerteelektronik zumindest mit einem abgespeicherten verbrauchsoptimalen Drehzahlkennfeldes für den Verbrennungsmotor auf.

Dabei wird der entsprechende Sollwert je nach Fahrwiderstand in eine entsprechende Leistungsanforderung und in eine Drehzahlvorgabe für den Verbrennungsmotor durch die Elektronik unter Berücksichtigung des momentanen Leistungsbedarfs anderer Verbraucher, wie der Nebenantriebe oder dergleichen, umgesetzt. Durch das Drehzahlkennfeld wird für die geforderte Leistungsabgabe eine verbrauchsoptimale Drehzahl vorgegeben.

Betriebszustände im verbrauchsungünstigen Teillastbereich werden durch die erfindungsgemäße Steuerung vermieden. Beispielsweise kann die Elektronik ein Nachregeln, d.h. ein Hochfahren, des Verbrennungsmotors entlang einer verbrauchsoptimalen Kurve des Kennfeldes solange bewirken, bis die durch den Sollwertgeber (Gaspedal) vorgegebene Geschwindigkeit bzw. die entsprechende Elektromotoren-Drehzahl wieder erreicht ist.

Um bei härteren Pisten beispielsweise eine höhere Zahneingriffshäufigkeit pro Strecke zu erreichen, ist das Übersetzungsverhältnis von Fräswelle zum Turrasrad einstellbar. Dies kann beispielsweise über ein Fräspotentiometer erfolgen.

Um eine Wartung und Inspektion des Kettenfahrzeuges zu vereinfachen und zu beschleunigen, kann am Kettenfahrzeug eine Diagnoseeinrichtung angeordnet sein. Diese ist vorzugsweise als Diagnosebox ausgebildet, über die insbesondere die elektrische Steuerung einschließlich Leistungselektronik des Kettenfahrzeuges in an sich bekannter Weise überprüfbar ist.

Bei einem einfachen Ausführungsbeispiel kann ein Sollwertgeber zur Vorgabe der Fahrzeuggeschwindigkeit als Fahrzpedal ausgebildet sein. Durch die Fahrpedalstellung wählt der Fahrer die gewünschte Fahrgeschwindigkeit vor. Diese entspricht bei einer Weiterbildung der Erfindung einem Sollwert für die Elektromotoren-Drehzahl. Die Vorgabe des Sollwertes erfolgt auch für eine Reduzierung der Geschwindigkeit, so daß ein Bremsen des Fahrzeugs durch eine geringere Betätigung des Fahrpedals durchgeführt werden kann.

Je nach aktuellem Fahrwiderstand bei Berg- oder Talfahrt wird durch den Sollwert der Elektromotoren-Drehzahl eine entsprechende Leistungsanforderung, das heißt eine entsprechende Antriebs- oder Bremsleistung, erzeugt. In diesem Zusammenhang ist es von Vorteil, wenn diese aktuelle Leistungsanforderung durch die Elektronik in eine Drehzahlvorgabe für den Dieselmotor umgesetzt wird, wobei es weiterhin von Vorteil ist, wenn mittels einer Kennfeldsteuerung durch die Elektronik die für die geforderte Leistungsabgabe verbrauchsoptimale Drehzahl vorgegeben wird. Dadurch werden Betriebszustände im verbrauchsungünstigen Teillastbereich vermieden.

Beispielsweise bei Bergfahrt bewirkt die Elektronik ein Hochfahren des Dieselmotors entlang der verbrauchsoptimalen Kurve des Kennfeldes, bis die durch das Fahrpedal vorgegebene Geschwindigkeit beziehungsweise Elektromotorendrehzahl wieder erreicht ist. Bei einem Abbremsen wird über die Fahrelektronik ein Ansteuern der Bremsstromsteuerung beziehungsweise Elektrofahrmotoren bewirkt. Die Elektrofahrmotore arbeiten generatorisch in diesem Fall und speisen Energie zurück in das System. Die restliche Energie für andere Verbraucher, wie beispielsweise eine Schneefräse, wird durch den Verbrennungsmotor bereitgestellt, der wie vorangehend angesteuert wird. Bei kurzfristigem Energieüberschuß des Gesamtsystems, im Falle zum Beispiel eines schnellen Nothalts, wird die überschüssige Energie herkömmlich über Bremswiderstände abgeführt.

Um das Anfahren und Anhalten am Berg zu erleichtern, weist das Fahrzeug eine zusätzliche Sicherheitslogik auf. Diese kann Teil der Elektronik der Fahrzeugsteuerung oder der Leistungselektronik sein. Die Sicherheitselektronik überprüft zumindest die Stellung eines Fahrtrichtungsschalters, die Betätigung des Fahrpedals und der Feststellbremse.

Ein Anfahren bei Berg- oder Talfahrt wird beispielsweise dadurch bewirkt, daß aufeinanderfolgend der Fahrtrichtungsschalter betätigt wird, die Feststellbremse gelöst wird, das Fahrzeug mittels bestromter Elektromotore an einem Abrollen gehindert ist, das Fahrpedal betätigt wird und sich schließlich das Pistenpflegefahrzeug in Bewegung versetzt. Bei einer Weiterbildung der Erfindung wird die Feststellbremse automatisch betätigt, wobei ein Lösen der Feststellbremse bei Betätigen das Fahrpedals beim Anfahren bewirkt wird.

Ein Anhalten bei Berg- oder Talfahrt erfolgt mittels der Sicherheitslogik dadurch, daß aufeinanderfolgend die Fahrpedalstellung auf Nullstellung zurückgenommen wird, dadurch das Pistenpflegefahrzeug kontrolliert verlangsamt wird und anhält, durch weitere Bestromung der Elektromotore ein Abrollen des Fahrzeugs verhindert wird, nach einer festgelegten Haltezeit die Feststellbremse automatisch betätigt wird sowie die Bestromung der Elektromotore beendet wird und der Verbrennungsmotor mit Leerlaufdrehzahl weiter betrieben wird. Dann kann der Fahrtrichtungsschalter in Neutralstellung gebracht werden.

Die vorangehend geschilderte Steuerung mittels eines Sollwertes beziehungsweise mittels der Sicherheitslogik kann durch eine separate Steuerungselektronik oder eine in der Fahrzeusteuerung oder der Leistungselektronik enthaltene Elektronik erfolgen.

Im folgenden werden vorteilhafte Ausführungsbeispiele der Erfindung anhand der in der Zeichnung beigefügten Figuren näher erläutert und beschrieben.

Es zeigen:
- Fig. 1: ein Blockschaltbild für Antrieb und Versorgung eines Kettenfahrzeuges;
- Fig. 2: verschiedene Variationen zur Anordnung von Elektromotoren und Getrieben;
- Fig. 3: eine Seitenansicht eines ersten Ausführungsbeispiels eines Kettenfahrzeuges, und
- Fig. 4: eine Seitenansicht eines weiteren Ausführungsbeispiels eines erfindungsgemäßen Kettenfahrzeuges.

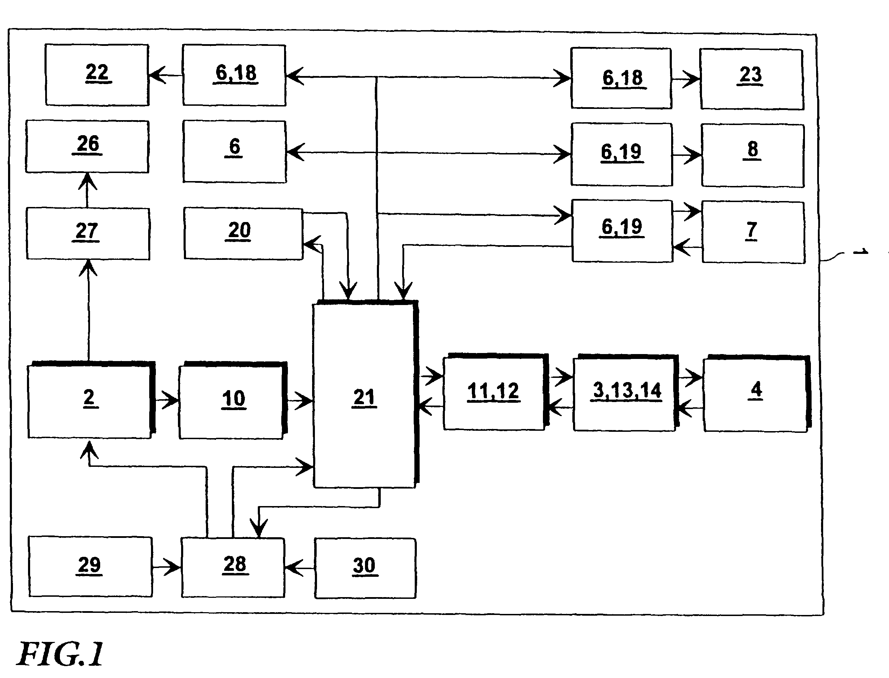

In Fig. 1 ist ein Blockschaltbild für Antrieb und Versorgung mit Zusatzgeräten und weiteren Fahrzeugkomponenten dargestellt.

Ein Verbrennungsmotor 2 ist mit einem Generator 10 zur Erzeugung elektrischer Energie antriebsverbunden. Weiterhin treibt der Verbrennungsmotor 2 eine Lichtmaschine 27 an, durch die eine entsprechende Fahrzeugbatterie 26 aufladbar ist.

Zentral im Kettenfahrzeug 1, das in Fig. 1 nur prinzipiell dargestellt ist, ist eine Leistungselektronik 21 angeordnet, der vom Generator 10 Strom zuführbar ist. Die Leistungselektronik 21 steuert nachgeschaltete Elektromotore 11, 12 zum Antrieb des Kettenfahrzeuges 1. Diese sind über entsprechende Getriebe 3, 13, 14 mit den Turrasrädern 4 der Ketten des Kettenfahrzeuges 1 antriebsverbunden.

Durch die Pfeilrichtungen in Fig. 1 ist der Energie- und Informationsfluß zwischen den einzelnen Baugruppen dargestellt. So fließt einerseits Energie von der Leistungselektronik 21 über die Elektromotore 11, 12 und Getriebe 3, 13, 14 zu den Turrasrädern 4. Bei Talfahrt oder im Schubbetrieb treiben in umgekehrter Weise die Turrasräder 4 über die Getriebe 3, 13, 14 die Elektromotore 11, 12 an, so daß diese generatorisch eingesetzt sind und Energie über die Leistungselektronik 21 rückspeisen.

Weiterhin ist eine Fahrzeugsteuerung 28 vorgesehen, die durch Vorgabe entsprechender Sollwerte von Fahrpedal 29 und Lenkrad 30 als Sollwertgeber sowohl den Verbrennungsmotor 2 als auch die Leistungselektronik 21 steuert bzw. die Sollwerte als Stellgrößen weitergibt.

Je nach Energiebedarf kann die Leistungselektronik 21 über die Fahrzeugsteuerung 28 die Motordrehzahl des Verbrennungsmotors 2 beeinflussen.

Die Leistungselektronik 21 ist weiterhin mit verschiedenen Nebenantrieben 6 verbunden. Zwei der Nebenantriebe 6 sind als elektrohydraulische Antriebe 18 mit Elektromotor, Hydraulikpumpe und entsprechendem Hydraulikmediumvorratsgefäß ausgebildet. Diese Nebenantriebe sind einem Frontsteuerblock 22 bzw. einem Hecksteuerblock 23 zugeordnet.

Zwei weitere Nebenantriebe sind als Elektromotore 19 gegebenenfalls mit zugehörigem Getriebe ausgebildet. Einer dieser Nebenantriebe dient zum Antrieb eines Zusatzgerätes 7, wie beispielsweise einer elektrischen Winde, durch die entsprechend zur Pfeilrichtung bei Talfahrt oder Schubbetrieb ebenfalls eine Energierückspeisung zur Leistungselektronik 21 erfolgen kann.

Der andere Nebenantrieb 6 mit elektrischem Antrieb 19 ist einem weiteren Zusatzgerät 8, wie beispielsweise einer Fräse, zugeordnet.

In einer erweiterten Ausführung ist schließlich die Leistungselektronik 21 noch mit einem Energiepuffer 20 wie einer Batterie oder einem Schwungradspeicher zur Energiespeicherung und zur Energieversorgung verbunden.

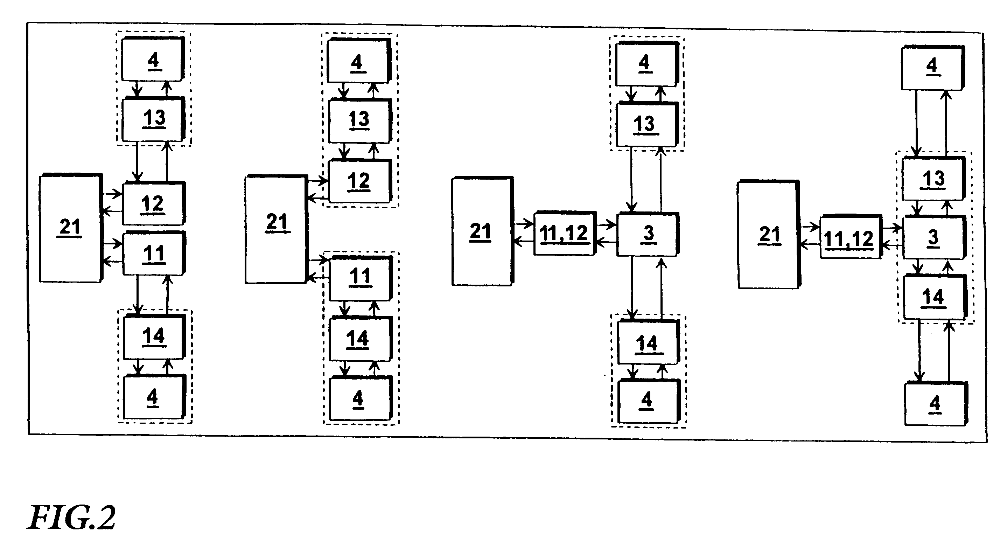

In Fig. 2 sind vier verschiedene Anordnungsbeispiele für Elektromotore 11, 12, zugehörige Getriebe 3, 13, 14 und Turrasräder 4 dargestellt.

Bei dem links dargestellten Beispiel ist für jedes Turrasrad einer Kette des Kettenfahrzeuges ein separater Elektromotor 11, 12 vorgesehen. Entsprechende Getriebe 13, 14, die als Planetengetriebe ausgebildet sein können, sind direkt jedem Turrasrad 4 zugeordnet, wobei die Elektromotore zentral dem Fahrzeugrahmen und die Getriebe 13, 14 und Turrasräder 4 räumlich direkt den Ketten zugeordnet sind.

Bei dem nächstfolgenden Anordnungsbeispiel sind die Elektromotore 11, 12 mit den zwischengeschalteten Getrieben 13, 14 direkt bei den Turrasrädern 4 angeordnet und entsprechend direkt den Ketten zugeordnet.

Beim nächsten Anordnungsbeispiel ist ein Elektromotor 11, 12 vorgesehen, der über ein Lenkgetriebe 3 beide Planetengetriebe 13, 14 mit zugeordnetem Turrasrad 4 versorgt. Bei diesem Beispiel sind der Elektromotor 11, 12 und das Lenkgetriebe 3 zentral am Fahrzeugrahmen angeordnet und die Planetengetriebe 13, 14 sind direkt den Turrasrädern 4 zugeordnet.

Beim letzten Anordnungsbeispiel sind das Lenkgetriebe 3 und die Planetengetriebe 13, 14 zu einer Einheit zusammengefaßt und wie der einzelne Elektromotor 11, 12 zentral am Fahrzeugrahmen angeordnet. In diesem Fall sind nur die Turrasräder 4 direkt in oder an der Kette angeordnet.

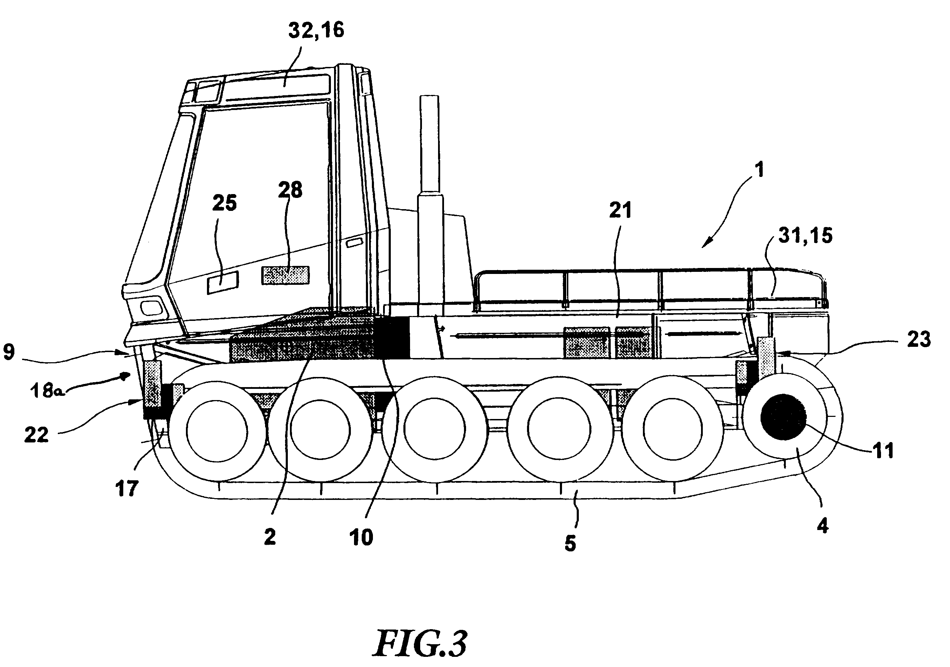

In Fig. 3 ist eine Seitenansicht eines erfindungsgemäßen Kettenfahrzeuges 1 dargestellt.

Der eigentliche Antriebsstrang aus Verbrennungsmotor 2, Generator 10, Leistungselektronik 21 und Elektromotor 11 für Turrasrad 4 ist in der dargestellten Ausführung im wesentlichen mittig in Längsrichtung des Kettenfahrzeuges 1 angeordnet. Bezüglich der räumlichen Anordnung der Komponenten besteht aufgrund deren elektrischer Verbindung dabei größtmögliche Gestaltungsfreiheit, somit sind verschiedene Anordnungen des Antriebsstranges am Kettenfahrzeug möglich. Bei dem dargestellten Ausführungsbeispiel ist der Elektromotor 11 direkt dem Turrasrad 4 zugeordnet, das eine Kette 5 antreibt.

Das Kettenfahrzeug 1 weist als weitere Fahrzeugkomponenten 15, 16 eine Ladeplattform 31 und ein Fahrerhaus 32 auf. Diese sind durch nicht dargestellte elektrische oder elektrohydraulische Antriebe kippbar.

An der Front und am Heck des Kettenfahrzeuges 1 ist jeweils ein Steuerblock 22 bzw. 23 angeordnet. Dieser ist entsprechend zu Fig. 1 mit einem elektrohydraulischen Antrieb 18 als Nebenantrieb 6 ausgebildet. Diese Steuerblöcke 22, 23 dienen beispielsweise zur Betätigung einer Verstelleinrichtung für Schubrahmen, Frontfrässchleuder oder Geräteträger, die zur Vereinfachung nicht dargestellt sind. Durch Bezugszeichen 9 und 18a sind eine Frontfrässchleuder zur Anordnung an dem entsprechenden Frontgeräteträger 18a des Kettenfahrzeuges 1 nur prinzipiell angedeutet.

Innerhalb des Fahrerhauses 32 ist die Fahrzeugsteuerung 28 und eine Diagnoseeinrichtung 25 angeordnet. Diese dient für Wartungs- und Inspektionszwecke. Die Diagnoseeinrichtung kann auch an einer anderen Stelle des Kettenfahrzeuges 1 angeordnet sein.

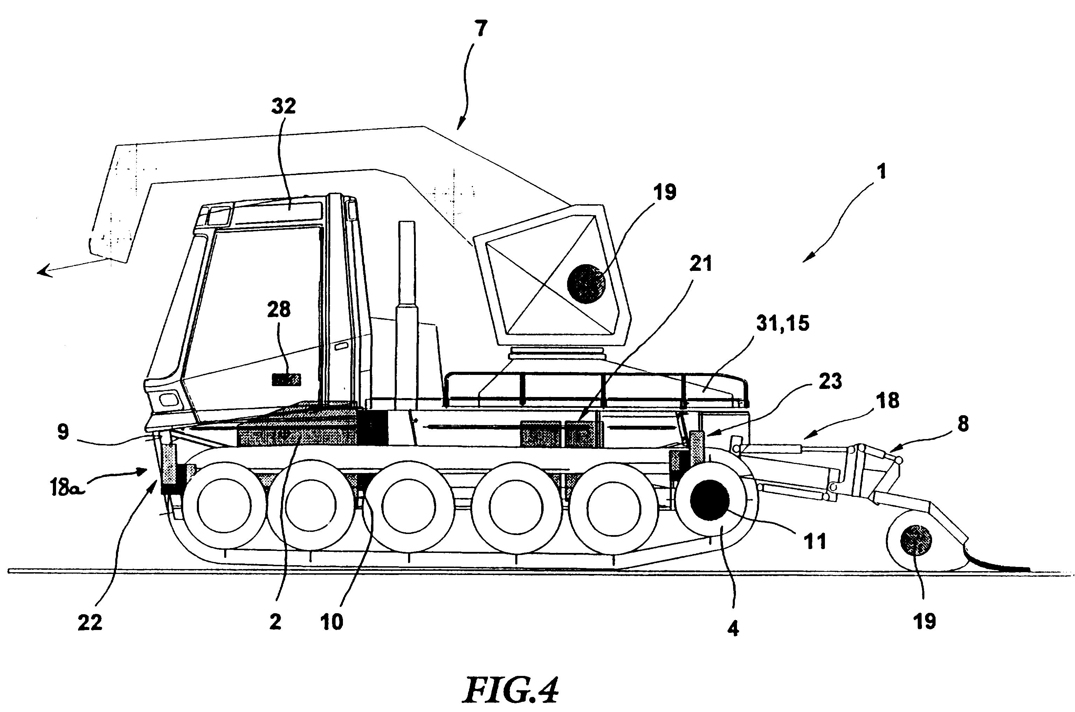

In Fig. 4 ist eine Seitenansicht eines weiteren Ausführungsbeispiels für ein Kettenfahrzeug 1 dargestellt. Gleiche Bezugszeichen kennzeichnen gleiche Teile und werden nur noch teilweise erwähnt.

Am Heck des Kettenfahrzeuges 1 ist als Zusatzgerät 8 eine Fräse mit nachgeordnetem Glätteschild angeordnet. Die Fräse weist eine durch einen elektrischen Antrieb 19 angetriebene Fräswelle auf. Das Zusatzgerät 8 ist über eine entsprechende Verstellkinematik mit elektrohydraulischem Antrieb 18 am Heck des Kettenfahrzeuges 1 verstellbar und verschwenkbar gelagert.

Über den Hecksteuerblock 23 kann die Verstellkinematik für das Zusatzgerät 8 betätigt werden, wobei in diesem Fall der elektrohydraulische Antrieb 18 in dem Hecksteuerblock 23 enthalten ist.

Auf der Ladeplattform 31 ist als weiteres Zusatzgerät 7 eine Winde angeordnet, die eine Haspel mit einem elektrischen Antrieb 19 aufweist.

Weitere Zusatzgeräte oder Fahrzeugkomponenten, wie Kettenspanneinrichtung, Feststellbremse, Frontgeräteträger, und dergleichen sind zur Vereinfachung in den Fig. 3 und 4 nicht dargestellt.

## Patentansprüche

1. Kettengetriebenes Pistenpflegefahrzeug (1) mit einem Verbrennungsmotor (2), der vorzugsweise über ein Getriebe (3, 13, 14) mit einem Turrasrad (4) einer jeden Fahrkette (5) antriebsverbunden ist, sowie mit Nebenantrieben (6) für am Kettenfahrzeug (1) anbringbare Zusatzgeräte (7, 8, 9) wie zum Beispiel Schneefräse, Frontfrässchleuder oder dergleichen und/oder für Fahrzeugkomponenten (15, 16, 17) wie beispielsweise eine Kippvorrichtung für Plattform und Fahrerhaus oder zur Kettenspannung, wobei der Verbrennungsmotor (2) über einen Generator (10) sowie wenigstens einen Elektromotor (11, 12) und ein Getriebe (13, 14) mit jedem Turrasrad (4) verbunden ist und der Elektromotor (11, 12) im Schiebebetrieb als Stromerzeuger für als elektrohydraulische oder elektrische Antriebe (18, 19) ausgebildete Nebenantriebe (6) schaltbar ist,
**dadurch gekennzeichnet,**
daß zumindest der elektrische Antrieb (19) für eine Fräswelle der Schneefräse mit dem Elektromotor (11, 12) des Turrasrades (4) synchronisiert ist.

2. Kettenfahrzeug nach Anspruch 1, **dadurch gekennzeichnet,** daß jedes Turrasrad (4) mit einem separaten Elektromotor (11,12) antriebsverbunden ist.

3. Kettenfahrzeug nach Anspruch 1 oder 2, **dadurch gekennzeichnet,** daß zwischen Elektromotor (11,12) und Turrasrad (4) ein Planetengetriebe (13,14) und bei nur einem Elektromotor (11,12) für die Turrasräder (4) beider Fahrketten (5) ein Lenkgetriebe (3) angeordnet sind.

4. Kettenfahrzeug nach wenigstens einem der vorangehenden Ansprüche, **dadurch gekennzeichnet,** daß ein Hydraulikmedium für den elektrohydraulischen Antrieb (18) ein Medium auf Wasserbasis ist.

5. Kettenfahrzeug nach wenigstens einem der vorangehenden Ansprüche, **dadurch gekennzeichnet,** daß das Kettenfahrzeug (1) mit einem vom Generator (10) oder vom generatorisch arbeitenden Elektromotor (11,12) speisbaren Energiepuffer (20) ausgebildet ist.

6. Kettenfahrzeug nach wenigstens einem der vorangehenden Ansprüche, **dadurch gekennzeichnet**, daß das Kettenfahrzeug (1) eine Leistungselektronik (21) zur Steuerung von Fahrmotoren (2,11,12) und/oder Nebenantrieben (6) aufweist.

7. Kettenfahrzeug nach wenigstens einem der vorangehenden Ansprüche, **dadurch gekennzeichnet**, daß der Verbrennungsmotor (2) eine elektronische Motorregelung aufweist.

8. Kettenfahrzeug nach wenigstens einem der vorangehenden Ansprüche, **dadurch gekennzeichnet,** daß zumindest die elektrohydraulischen Funktionseinheiten (22, 23) für die Betätigung von Fahrzeugfunktion (15-18a) wie z.B. des Front- und Heckgeräteträgers dezentral angeordnet sind und einen Elektromotor, eine Pumpe, einen Steuerblock und einen Hydraulikmediumtank umfassen.

9. Kettenfahrzeug nach wenigstens einem der vorangehenden Ansprüche, **dadurch gekennzeichnet,** daß die Leistungselektronik (21) zur Energieverteilung an alle Verbraucher (6 bis 9,11,12,15 bis 24) und zur Energierückspeisung zentral im Kettenfahrzeug (1) angeordnet ist.

10. Kettenfahrzeug nach wenigstens einem der vorangehenden Ansprüche, **dadurch gekennzeichnet,** daß alle Komponenten (2,3,6 bis 12, 15 bis 25) des Kettenfahrzeuges modulartig aufgebaut sind.

11. Kettenfahrzeug nach wenigstens einem der vorangehenden Ansprüche, **dadurch gekennzeichnet**, daß das Kettenfahrzeug (1) eine Feststellbremse, insbesondere als im Planetengetriebe (13,14) integrierte Lamellenbremse aufweist, die durch ein Hydraulikmedium auf Wasserbasis betätigbar ist.

12. Kettenfahrzeug nach wenigstens einem der vorangehenden Ansprüche, **dadurch gekennzeichnet,** daß das Kettenfahrzeug (1) eine Winde (24) mit elektrischem Antrieb (19) aufweist.

13. Kettenfahrzeug nach wenigstens einem der vorangehenden Ansprüche, **dadurch gekennzeichnet,** daß das Kettenfahrzeug (1) eine Winde (24) mit elektrischem Antrieb (19) aufweist, welche zur Energierückspeisung bei Talfahrt ausgebildet ist.

14. Kettenfahrzeug nach wenigstens einem der vorangehenden Ansprüche, **dadurch gekennzeichnet,** daß das Kettenfahrzeug (1) zur Zufuhr von externer Energie eine Energieeinspeiseeinrichtung aufweist.

15. Kettenfahrzeug nach wenigstens einem der vorangehenden Ansprüche, **dadurch gekennzeichnet,** daß die Energieeinspeiseeinrichtung als Schleppkabel oder als mit Fahrdrähten bzw. Stromschienen koppelbares Kupplungssystem ausgebildet ist.

16. Kettenfahrzeug nach wenigstens einem der vorangehenden Ansprüche, **dadurch gekennzeichnet,** daß das Kettenfahrzeug (1) einen Verbundanschluß zur energetischen Verbindung mit wenigstens einem weiteren Kettenfahrzeug aufweist.

17. Kettenfahrzeug nach wenigstens einem der vorangehenden Ansprüche, **dadurch gekennzeichnet**, daß eine Heizung des Kettenfahrzeuges (1) mit Abwärme der Motore (11,12) des Hydrauliksystems (18) und/oder der Leistungselektronik (21) versorgt ist.

18. Kettenfahrzeug nach wenigstens einem der vorangehenden Ansprüche, **dadurch gekennzeichnet,** daß das Kettenfahrzeug (1) wenigstens einen Sollwertgeber für zumindest die gewünschte Fahrgeschwindigkeit aufweist.

19. Kettenfahrzeug nach wenigstens einem der vorangehenden Ansprüche, **dadurch gekennzeichnet,** daß die Leistungselektronik (21) beziehungsweise die Fahrzeugsteuerung mit dem Sollwertgeber verbunden ist und eine Auswerteelektronik zumindest zur Bestimmung von verbrauchsoptimalen Drehzahlen für den Verbrennungsmotor (2) aufweist.

20. Kettenfahrzeug nach wenigstens einem der vorangehenden Ansprüche, **dadurch gekennzeichnet,** daß das Übersetzungsverhältnis von Fräswelle zu Turrasrad einstellbar ist.

21. Kettenfahrzeug nach wenigstens einem der vorangehenden Ansprüche, **dadurch gekennzeichnet,** daß am Kettenfahrzeug (1) für Wartung und Inspektion der elektrischen Steuerung (21,22,23) eine Diagnoseeinrichtung angeordnet ist.

22. Kettenfahrzeug nach wenigstens einem der vorangehenden Ansprüche, **dadurch gekennzeichnet,** daß der Sollwertgeber als Fahrpedal zur Steuerung von Geschwindigkeit und Abbremsen ausgebildet ist.

23. Kettenfahrzeug nach wenigstens einem der vorangehenden Ansprüche, **dadurch gekennzeichnet**, daß der vorgegebene Sollwert ein Sollwert der Elektromotoren-Drehzahl ist.

24. Kettenfahrzeug nach wenigstens einem der vorangehenden Ansprüche, **dadurch gekennzeichnet**, daß der Sollwert durch die Elektronik in eine Drehzahlvorgabe für den Verbrennungsmotor umsetzbar ist.

25. Kettenfahrzeug nach wenigstens einem der vorangehenden Ansprüche, **dadurch gekennzeichnet,** daß die Elektronik eine Kennfeldsteuerung zur Bestimmung der verbrauchsoptimalen Drehzahl umfaßt.

26. Kettenfahrzeug nach wenigstens einem der vorangehenden Ansprüche, **dadurch gekennzeichnet,** daß das Fahrzeug eine Sicherheitslogik zum Anfahren und Anhalten aufweist, welche zumindest die Stellung eines Fahrtrichtungsschalters, die Betätigung des Fahrpedals und der Feststellbremse erfaßt.

27. Kettenfahrzeug nach wenigstens einem der vorangehenden Ansrpüche, **dadurch gekennzeichnet,** daß die Feststellbremse automatisch betätigbar ist.

## Claims

1. Chain-driven ski run maintenance vehicle (1) with an internal combustion engine (2), which is in driving connection, preferably via a gear unit (3, 13, 14), with a tumbler wheel (4) of each traction chain (5), and with auxiliary drives (6) for additional implements (7, 8, 9) such as, for example, rotary snow plough, front rotary blower or similar, which can be mounted on the tracklaying vehicle (1), and/or for vehicle components (15, 16, 17) such as, for example, a tilting device for the platform and driver's cab or for chain tensioning, wherein the internal combustion engine (2) is connected to each tumbler wheel (4) via a generator (10), at least one electric motor (11, 12) and a gear unit (13, 14), and the electric motor (11, 12) can be connected in overrun as an electric generator for auxiliary drives (6) formed as electrohydraulic or electric drives (18, 19),
characterised in that at least the electric drive (19) for a rotary plough shaft of the rotary snow plough is synchronised with the electric motor (11, 12) of the tumbler wheel (4).

2. Tracklaying vehicle according to Claim 1, characterised in that each tumbler wheel (4) is in driving connection with a separate electric motor (11, 12).

3. Tracklaying vehicle according to Claim 1 or 2,
characterised in that a planetary gear unit (13, 14) is disposed between the electric motor (11, 12) and the tumbler wheel (4) and, when just one electric motor (11, 12) is provided for the tumbler wheels (4) of both traction chains (5), a steering gear unit (3) is disposed between the electric motor (11, 12) and the tumbler wheel (4).

4. Tracklaying vehicle according to at least one of the preceding Claims, characterised in that a hydraulic medium for the electrohydraulic drive (18) is a water-based medium.

5. Tracklaying vehicle according to at least one of the preceding Claims, characterised in that the tracklaying vehicle (1) is formed with an energy store (20) which can be fed by the generator (10) or by the electric motor (11, 12), which operates like a generator.

6. Tracklaying vehicle according to at least one of the preceding Claims, characterised in that the tracklaying vehicle (1) comprises power electronics (21) for controlling traction motors (2, 11, 12) and/or auxiliary drives (6).

7. Tracklaying vehicle according to at least one of the preceding Claims, characterised in that the internal combustion engine (2) comprises an electronic engine control system.

8. Tracklaying vehicle according to at least one of the preceding Claims, characterised in that at least the electrohydraulic functional units (22, 23) for operating a vehicle function (15-18a) such as, e.g. the front and rear implement carrier, are decentralized and include an electric motor, a pump, a control block and a hydraulic medium tank.

9. Tracklaying vehicle according to at least one of the preceding Claims, characterised in that the power electronics (21) for distributing energy to all the consumers (6 to 9, 11, 12, 15 to 24) and for energy recovery are disposed centrally in the tracklaying vehicle (1).

10. Tracklaying vehicle according to at least one of the preceding Claims, characterised in that all components (2, 3, 6 to 12, 15 to 25) of the tracklaying vehicle are of modular construction.

11. Tracklaying vehicle according to at least one of the preceding Claims, characterised in that the tracklaying vehicle (1) comprises a parking brake, in particular in the form of a multiple-disc brake which is integrated into the planetary gear unit (13, 14) and can be operated by a water-based hydraulic medium.

12. Tracklaying vehicle according to at least one of the preceding Claims, characterised in that the tracklaying vehicle (1) comprises a winch (24) with an electric drive (19) .

13. Tracklaying vehicle according to at least one of the preceding Claims, characterised in that the tracklaying vehicle (1) comprises a winch (24) with an electric drive (19), which winch is formed for energy recovery when driving downhill.

14. Tracklaying vehicle according to at least one of the preceding Claims, characterised in that the tracklaying vehicle (1) comprises an energy supply device for supplying external energy.

15. Tracklaying vehicle according to at least one of the preceding Claims, characterised in that the energy supply device is formed as a trailing cable or as a coupling system which can be coupled to contact wires or busbars.

16. Tracklaying vehicle according to at least one of the preceding Claims, characterised in that the tracklaying vehicle (1) comprises an interconnection for an energy-transmitting connection with at least one other tracklaying vehicle.

17. Tracklaying vehicle according to at least one of the preceding Claims, characterised in that a heating system of the tracklaying vehicle (1) is supplied with waste heat from the motors (11, 12) of the hydraulic system (18) and/or from the power electronics (21).

18. Tracklaying vehicle according to at least one of the preceding Claims, characterised in that the tracklaying vehicle (1) comprises at least one set-point device for at least the desired travelling speed.

19. Tracklaying vehicle according to at least one of the preceding Claims, characterised in that the power electronics (21) or vehicle control system is connected to the set-point device and comprises evaluation electronics at least for determining speeds for the internal combustion engine (2) which are optimum in consumption terms.

20. Tracklaying vehicle according to at least one of the preceding Claims, characterised in that the transmission ratio of rotary plough shaft to tumbler wheel is adjustable.

21. Tracklaying vehicle according to at least one of the preceding Claims, characterised in that a diagnostic device is disposed on the tracklaying vehicle (1) for the maintenance and inspection of the electrical control system (21, 22, 23).

22. Tracklaying vehicle according to at least one of the preceding Claims, characterised in that the set-point device is formed as an accelerator pedal for controlling speed and braking.

23. Tracklaying vehicle according to at least one of the preceding Claims, characterised in that the predetermined set point is a set point for the electric motor speed.

24. Tracklaying vehicle according to at least one of the preceding Claims, characterised in that the set point can be converted by the electronics into a speed requirement for the internal combustion engine.

25. Tracklaying vehicle according to at least one of the preceding Claims, characterised in that the electronics include a characteristic control system for determining the speed which is optimum in consumption terms.

26. Tracklaying vehicle according to at least one of the preceding Claims, characterised in that the vehicle comprises safety logic for starting and stopping which detects at least the position of a direction-of-travel switch, the operation of the accelerator pedal and the parking brake.

27. Tracklaying vehicle according to at least one of the preceding Claims, characterised in that the parking brake can be automatically operated.

## Revendications

1. Véhicule sur chenilles pour l'entretien des pistes (1), comprenant un moteur à combustion interne (2) qui, de préférence par l'intermédiaire d'une boîte de vitesses (3, 13, 14), forme une liaison motrice avec un barbotin (4) réservé à chacune des chenilles (5), ainsi que des moteurs auxiliaires (6) destinés à des outils supplémentaires (7, 8, 9), tels qu'un chasse-neige à fraise, un tambour de fraisage avant ou un élément analogue, à installer sur le véhicule sur chenilles (1), et/ou à des modules du véhicule (15, 16, 17), tels qu'un dispositif à bascule pour la plate-forme et la cabine du conducteur ou pour la tension de la chenille, le moteur à combustion interne (2) étant relié à chaque barbotin (4) par l'intermédiaire d'un alternateur (10), ainsi qu'au moins un moteur électrique (11, 12) et une boîte de vitesses (13, 14), et le moteur électrique (11, 12) pouvant être connecté en mode de renfort comme génératrice de courant pour les moteurs auxiliaires (6) conçus sous forme de moteurs électro-hydrauliques ou électriques (18, 19), caractérisé en ce qu'au moins le moteur électrique (19) destiné à l'arbre du chasse-neige à fraise est synchronisé avec le moteur électrique (11, 12) du barbotin (4).

2. Véhicule sur chenilles selon la revendication 1, caractérisé en ce que chaque barbotin (4) est en liaison motrice avec un moteur électrique (11, 12) séparé.

3. Véhicule sur chenilles selon la revendication 1 ou 2, caractérisé en ce qu'une boîte à engrenages planétaires (13, 14) et, dans le cas d'un seul moteur électrique (11, 12) pour les barbotins (4) des deux chenilles (5), un mécanisme de direction (3) sont montés entre le moteur électrique (11, 12) et le barbotin (4).

4. Véhicule sur chenilles selon l'une quelconque des revendications précédentes, caractérisé en ce que le milieu hydraulique pour le moteur électro-hydraulique (18) est un milieu contenant de l'eau.

5. Véhicule sur chenilles selon l'une quelconque des revendications précédentes, caractérisé en ce que le véhicule sur chenilles (1) est conçu avec une batterie tampon (20) qui peut être alimentée par l'alternateur (10) ou par le moteur électrique (11, 12) connecté dans le mode de fonctionnement d'une génératrice.

6. Véhicule sur chenilles selon l'une quelconque des revendications précédentes, caractérisé en ce que le véhicule sur chenilles (1) comprend un module électronique de puissance (21) destiné à commander les moteurs de traction (2, 11, 12) et/ou les moteurs auxiliaires (6).

7. Véhicule sur chenilles selon l'une quelconque des revendications précédentes, caractérisé en ce que le moteur à combustion interne (2) comporte un dispositif électronique de réglage du moteur.

8. Véhicule sur chenilles selon l'une quelconque des revendications précédentes, caractérisé en ce qu'au moins les unités de fonctionnement électro-hydrauliques (22, 23), destinées à manoeuvrer la fonction du véhicule (15-18a), tel le support de l'outil avant et le support de l'outil arrière, sont disposées de manière décentralisée et comprennent un moteur électrique, une pompe, une unité de commande et un réservoir pour le milieu hydraulique.

9. Véhicule sur chenilles selon l'une quelconque des revendications précédentes, caractérisé en ce que le module électronique de puissance (21), destiné à distribuer l'énergie vers tous les consommateurs (6 à 9, 11, 12, 15 à 24) et à récupérer l'énergie, est disposé au centre du véhicule sur chenilles (1).

10. Véhicule sur chenilles selon l'une quelconque des revendications précédentes, caractérisé en ce que tous les composants (2, 3, 6 à 12, 15 à 25) du véhicule sur chenilles sont conçus sous forme modulaire.

11. Véhicule sur chenilles selon l'une quelconque des revendications précédentes, caractérisé en ce que le véhicule sur chenilles (1) est muni d'un frein de stationnement, en particulier en forme de frein à disques multiples intégré dans la boîte à engrenages planétaires (13, 14), lequel frein peut être actionné par un milieu hydraulique contenant de l'eau.

12. Véhicule sur chenilles selon l'une quelconque des revendications précédentes, caractérisé en ce que le véhicule sur chenilles (1) est muni d'un vérin (24) à commande électrique (19).

13. Véhicule sur chenilles selon l'une quelconque des revendications précédentes, caractérisé en ce que le véhicule sur chenilles (1) est muni d'un vérin (24) à commande électrique (19), qui est conçu pour la récupération de l'énergie lorsque ledit véhicule circule sur un terrain en pente.

14. Véhicule sur chenilles selon l'une quelconque des revendications précédentes, caractérisé en ce que le véhicule sur chenilles (1) est muni d'un dispositif d'alimentation en énergie pour l'admission d'une énergie externe.

15. Véhicule sur chenilles selon l'une quelconque des revendications précédentes, caractérisé en ce que le dispositif d'alimentation en énergie est conçu en forme de câble souple à enrouler ou en forme de système de couplage qui peut être assemblé à des fils de contact ou des rails conducteurs.

16. Véhicule sur chenilles selon l'une quelconque des revendications précédentes, caractérisé en ce que le véhicule sur chenilles (1) est muni d'une connexion compound destinée à établir une liaison énergétique avec au moins un autre véhicule sur chenilles.

17. Véhicule sur chenilles selon l'une quelconque des revendications précédentes, caractérisé en ce qu'un dispositif de chauffage du véhicule sur chenilles (1) est alimenté par la chaleur dégagée par les moteurs (11, 12) du système hydraulique (18) et/ou par le module électronique de puissance (21).

18. Véhicule sur chenilles selon l'une quelconque des revendications précédentes, caractérisé en ce que le véhicule sur chenilles (1) est muni d'au moins un transmetteur de la valeur de consigne pour au moins la vitesse souhaitée du véhicule.

19. Véhicule sur chenilles selon l'une quelconque des revendications précédentes, caractérisé en ce que le module électronique de puissance (21) ou le dispositif de commande du véhicule est relié avec le transmetteur de la valeur de consigne et est muni d'un dispositif électronique d'analyse au moins pour calculer les vitesses de rotation du moteur de combustion interne (2) destinées à optimiser la consommation.

20. Véhicule sur chenilles selon l'une quelconque des revendications précédentes, caractérisé en ce qu'il est possible de réguler le rapport de vitesse de l'arbre de la fraise par rapport au barbotin.

21. Véhicule sur chenilles selon l'une quelconque des revendications précédentes, caractérisé en ce que sur le véhicule sur chenilles (1) est monté un dispositif de diagnostic destiné à la maintenance et au contrôle de la commande électrique (21, 22, 23).

22. Véhicule sur chenilles selon l'une quelconque des revendications précédentes, caractérisé en ce que le transmetteur de la valeur de consigne est conçu en forme de pédale d'accélérateur destinée à commander la vitesse et la décélération.

23. Véhicule sur chenilles selon l'une quelconque des revendications précédentes, caractérisé en ce que la valeur de consigne prédéfinie est une valeur de consigne pour la vitesse de rotation des moteurs électriques.

24. Véhicule sur chenilles selon l'une quelconque des revendications précédentes, caractérisé en ce que la valeur de consigne peut être transformée par le module électronique en valeur de référence de la vitesse de rotation du moteur à combustion interne.

25. Véhicule sur chenilles selon l'une quelconque des revendications précédentes, caractérisé en ce que le module électronique comprend une définition des réseaux de caractéristiques pour déterminer la vitesse de rotation optimale pour la consommation.

26. Véhicule sur chenilles selon l'une quelconque des revendications précédentes, caractérisé en ce que le véhicule est muni d'une logique de sécurité pour mettre en marche et arrêter le véhicule, laquelle enregistre au moins la position d'un clignoteur, la manoeuvre de la pédale d'accélérateur et du frein de stationnement.

27. Véhicule sur chenilles selon l'une quelconque des revendications précédentes, caractérisé en ce que le frein de stationnement peut être actionné automatiquement.
